Europäisches Patentamt

European Patent Office

Office européen des brevets

(19)

(11) Publication number: **0 192 342 B1**

# EUROPEAN PATENT SPECIFICATION

(12)

(45) Date of publication of patent specification: **19.02.92**   (51) Int. Cl.⁵: **A01N 63/02**, A01C 1/06

(21) Application number: **86300461.0**

(22) Date of filing: **23.01.86**

(54) **Treatment of seeds.**

(30) Priority: **14.02.85 GB 8503793**

(43) Date of publication of application:
**27.08.86 Bulletin 86/35**

(45) Publication of the grant of the patent:
**19.02.92 Bulletin 92/08**

(84) Designated Contracting States:
**AT BE CH DE FR IT LI NL SE**

(56) References cited:
**EP-A- 0 092 990
EP-A- 0 097 459
EP-A- 0 102 702
US-A- 3 214 866**

(73) Proprietor: **IMPERIAL CHEMICAL INDUSTRIES PLC
Imperial Chemical House, Millbank
London SW1P 3JF(GB)**

(72) Inventor: **Powell, Keith Adrian
6 Pitts Close Emmets Park
Binfield Berkshire(GB)**
Inventor: **Lethbridge, Gordon
Oakdene Swallow Way Woosehill
Wokingham Berkshire(GB)**

(74) Representative: **Bishop, Nigel Douglas et al
Imperial Chemical Industries PLC Legal Department: Patents PO Box 6 Bessemer Road
Welwyn Garden City Herts, AL7 1HD(GB)**

EP 0 192 342 B1

Rank Xerox (UK) Business Services

## Description

This invention relates to a method for the treatment of agriculturally useful seeds to coat them with carrier materials containing agriculturally useful microorganisms and to such seeds coated with carrier materials containing such microorganisms.

It has been found that certain microorganisms when present in the soil in the vicinity of the seeds of particular plants can function symbiotically with the seeds in a number of ways to improve growth of the plants. For instance some microorganisms can fix nitrogen in the soil and can thereby supplement the effect of nitrogenous fertilizers when present near the seeds of particular plants. Other microorganisms can control certain pests and diseases which affect plants.

It has been shown that some strains of Azospirillum have a beneficial effect upon the growth of wheat. This can be used either to increase the yield of wheat obtainable with a given weight of fertilizer or to obtain the same yield using less fertilizer. Rhizobium strains can be used to fix nitrogen and improve crop yields from other seeds such as soya beans, alfalfa and clover. The control of plant diseases with microorganisms can be illustrated by the use of strains of Pseudomonas and Bacillus to control the fungus Gaeumannomyces graminis which causes take-all in wheat and ophiobolus patch in turf grass. Similarly certain Streptomyces species capable of producing macrocyclic lactones can be employed to control nematode and insect pests of plants as disclosed in European published patent application No. 0102702A1.

Microorganisms to be used in the treatment of seeds may be applied to the soil in which the seeds are set in a variety of ways. Generally they are applied by watering cultures onto the soil or they are applied in admixture with soil, peat or manure or in soil/manure mixtures. The microorganisms may be applied to the seeds before planting by coating the seeds with a carrier material, usually peat, containing microorganisms. Various gums such as gum arabic have been proposed for sticking the carrier material to the seeds (see the article by Joe C. Burton - "Microbial Technology", 2nd Edition, Vol 1, chapter 2, at pages 52 and 53).

Application of microorganisms to soil as cultures or in mixtures is disadvantageous because the microorganisms thus applied survive for only limited periods. Moreover these modes of application involve increased work as they introduce an extra step into seed planting. The use of seeds coated by known methods also has disadvantages since the coatings are uneven. This leads to reduced survival times for the microorganisms and to low loadings of microorganisms onto individual seeds - by known coating methods the highest loadings of viable microorganisms onto individual seeds are of the order of $10^4$ to $10^5$ cells per seed.

According to the present invention we provide an agriculturally useful seed which has a coating comprising an adhesive, a carrier material and agriculturally useful microorganism cells wherein the carrier material comprises bran in a proportion between 50% and 100% by weight of the carrier material.

Further according to the invention we provide an agriculturally useful seed as hereinbefore described wherein the adhesive comprises gum ghatti as the major component for adhesion.

Further according to the invention we provide a method for applying a coating containing agriculturally useful microorganism cells to agriculturally useful seeds which comprises the steps of (1) treating the seeds with an adhesive and (2) contacting the adhesive treated seeds with a carrier material bearing the microorganism cells upon it wherein the carrier material comprises bran in a proportion between 50% and 100% by weight of the carrier material.

Further according to the invention we provide a method for applying a coating containing microorganism cells to seeds as hereinbefore described, wherein the adhesive comprises gum ghatti as the major component for adhesion.

Preferably the coatings on the seeds of the invention comprise adhesives in which gum ghatti is the sole or the major component for adhesion and carrier materials in which bran is the sole or the major component. Methods for growing crops from the seeds of the invention are also included within the scope of the invention.

Bran is the husk of wheat, barley, oats or other grain separated from the flour after grinding. In technical use it is the coarsest portion of the ground husk.

Gum ghatti is a water soluble gum from the tree Anogeissus latifola of the Combretaceae family. The gum exudate of the tree is dried before being further processed and purified. It is basically the calcium salt of the polysaccharidic acid ghattic acid. Gum ghatti is also known as Indian gum.

Suitably the coatings on the seeds of the invention contain as an additional component a seed dressing which inhibits root pathogens in the soil but does not inhibit growth of the microorganisms in the coatings. Preferred seed dressings include the fungicide "BAYTAN" F (Registered Trade Mark), a mixture of triadimenol and fuberidazole, diclobutrazole "VIGIL" (Registered Trade Mark) and "FERRAX" (Registered Trade Mark), a mixture of flutriafol, thiabendazole and ethirimol. Triadimenol is the ISO-approved common

EP 0 192 342 B1

name for 1-(4-chlorophenoxy-3,3-dimethyl-1-(1H-1,2,4-triazol-1-yl) butan-2-ol; fuberidazole is the ISO-approved common name for 2-(2-furyl)benzimidazole; diclobutrazole is the ISO-approved common name for (2RS,3RS)-1-(2,4-dichlorophenyl)-4,4-dimethyl-2-(1H-1,2,4-triazol-1-yl) pentan-3-ol; flutriafol is the proposed common name for 1-(2-chlorophenyl)-1-(4-fluorophenyl)-2-(1H-1,2,4-triazol-1-yl)ethanol, thiabendazole is the ISO-approved common name for 2-(thiazol-4-yl)benzimidazole; and ethirimol is the ISO-approved common name for 5-n-butyl-2-ethylamino-6-methylpyrimidin-4-ol.

The invention is widely applicable to any situation wherein it is desirable to provide microorganism cells in the vicinity of seeds after planting. For example the invention can be used to improve crop yields of soya beans, alfalfa and clover or other leguminous crops from seeds having coatings which contain cells of Rhizobium species such as R. meliloti, R. trifoli, R. leguminosarum, R. phaseoli, R. japonicum and R. lupini. Examples of the application of the invention to the control of plant diseases are wheat seeds and grass seeds having coatings containing bacterial cells from certain strains of the genera Pseudomonas or Bacillus to control the fungus Gaeunannomyces graminus which causes take-all in wheat and Ophiobolus patch in turf grass. A further application of the invention is to provide wheat seeds coated with cells of Azospirillum species to improve crop yields.

In the method of the invention microorganism cells are suitably added to the carrier material, eg. bran, by applying a whole or washed culture of cells to sterile carrier material. Preferably a late exponential phase cell culture is used. Preferably the culture is applied to the carrier material in an amount between 0.2 mls and 5.0 mls per gm of carrier material, particularly approximately 1 ml culture per gm carrier material. After application of the culture to the carrier material, the material is preferably dried for a period of between 1 day and 5 days before being ground to a suitable size eg. to pass a 0.5 mm or smaller mesh. Drying is preferably at room temperature and when the dried carrier material is ground in a centrifugal mill it is preferred that the mill temperature does not exceed a maximum value, 50°C in the case of Azospirillum, to avoid any risk of killing the microorganism cells. Using this method a carrier material (eg. dried bran) containing as much as $10^9$ or more viable cells per gm of material can be attained without any significant loss of vitality being detectable after storage at room temperature for lengthy periods such as six months. If required carrier material containing cells may be diluted with untreated material by mixing on a rolling bed.

In a further aspect therefore the invention provides a composition comprising agriculturally useful microorganism cells, suitable for use as a seed coating, in which the microorganism cells are supported on a carrier material consisting of from 50% to 100% of bran. Preferably the composition contains at least $10^9$ cells per gram of the composition.

Seeds to be treated by the method of the invention are first coated with the adhesive, suitably in aqueous solution, eg. an aqueous solution of gum ghatti. Suitably an aqueous solution containing between 1% and 20% of the adhesive is used, a solution containing approximately 10% of adhesive being particularly preferred in the case of gum ghatti. The aqueous solution is suitably applied to the seed in an amount between 0.5 litres and 2.0 litres per 10kg of seed, particularly approximately 1 litre solution to 10 kg seed. After the seed has been treated with adhesive, the carrier material containing microorganisms is applied preferably in an amount between 0.5 kg and 2.0 kg carrier material per 10 kg adhesive treated seed. When the carrier material is bran an amount of approximately 1.5 kg bran to 10 kg of seeds is particularly preferred. Preferably the carrier material is applied to the seeds by end over end mixing in which case an even coating of the seeds is achieved within a few minutes. After application of the carrier material, the coated seeds are preferably left to stand in heaps for a period of 8 to 12 hours before bagging in order to allow the adhesive to harden. Standing is however not essential since the coated seeds upon leaving the mixing drum are generally sufficiently dry to be bagged without delay.

The invention can be used to produce coated seed which is free-flowing and has a coating which has little or no adverse effect upon germination and very little of which coating is lost by the process of sowing the seeds eg. by drilling. Coatings containing more than $10^7$ viable cells per seed can be achieved with no detectable decrease in viability during periods of at least six months.

In the method of the invention the carrier containing microorganism cells is applied to seeds as a dry powder. This leads to the following advantages :

(a) regular monitoring of the moisture content of the treated carrier is avoided;

(b) a uniform seed coating can be achieved, because the carrier is not applied in water; and

(c) a consequence of (b) is that higher loadings of cells per seed can be achieved by comparison with known coated seeds.

The invention is illustrated by the following Examples.

EXAMPLE 1

3

This Example illustrates the preparation of a bran based composition containing microorganisms cells, suitable for coating seeds.

Late exponential phase culture of Azospirillum brasilense strains MB 242 and S 631 and Azospirillum lipoferum strain BR 17 (cultures of which have been deposited at the National Collection of Industrial and Marine Bacteria (NCIMB), Torry Research Station, Aberdeen, Scotland, UK and have been assigned the accession numbers NCIMB 12039 and 12040 - strains MB 242 and S 631 respectively - and NCIMB 12041 - strain BR 17) were washed with water and applied to sterile bran in a proportion of 1 ml washed culture to 1g bran. The bran was mixed fine bran of particle length 112 - 1036 $\mu$m obtained from Allied Mills Ltd., William King Division, New Mills, Uxbridge, UB9 4AF, Middlesex, England. Thereafter the bran was placed in a laminar flow cabinet where it was dried for between 3 and 4 days at room temperature. The dried bran was removed from the cabinet and ground in a centrifugal mill until it could pass a 0.5 mm mesh. During milling the temperature of the mill was monitored to ensure that it did not exceed 40°C in order to avoid killing any significant proportion of the Azospirillum cells.

The effects of the drying temperature and grinding operation on the viability of Azospirillum brazilense strains MB 242 and S 631 is given in the following table.

## TABLE I

## Effect of Drying Temperature and Grinding on Viability of Azospirillum Supported on Dried Bran

| Strain | Drying time (hrs) | Viable Count (cfu g$^{-1}$ bran) | |
|---|---|---|---|
| | | 18°C | 30°C |
| M 242 | 0 | $8.1 \times 10^8$ | $2.5 \times 10^9$ |
| | 8 | - | $1.7 \times 10^8$ |
| | 24 | $1.3 \times 10^9$ | $3.6 \times 10^7$ |
| | 96 | $5.3 \times 10^8$ | - |
| | After grinding | $8.0 \times 10^8$ | $8.7 \times 10^6$ |
| S 631 | 0 | $1.7 \times 10^9$ | $2.8 \times 10^9$ |
| | 8 | - | $1.1 \times 10^8$ |
| | 24 | $1.1 \times 10^9$ | $1.8 \times 10^7$ |
| | 96 | $9.5 \times 10^8$ | $3.7 \times 10^6$ |
| | After grinding | $8.7 \times 10^8$ | |

EXAMPLE 2

This Example illustrates the process of coating seeds with a bran based composition.

Wheat seeds were treated with "BAYTAN" (Registered Trade Mark) seed dressing. "BAYTAN" is a dressing which does not inhibit Azospirillum cells and hence is suitable for use with seeds to which these cells are applied. The dressed seeds were then coated with a 10% solution of gum ghatti in water, 1 litre of solution being applied to 10kg of seed. Bran, treated with Azospirillum cells and dried as described in Example 1 above, was then added to the coated seeds in a mixing drum, 1.5 kg dried bran being added per 10 kg gum-coated seeds. Seeds and bran were mixed by end to end mixing for 5 minutes to give seeds evenly coated with Azospirillum-containing bran. When removed from the mixing drum the coated seeds were sufficiently dry to be bagged immediately. However, as a precautionary measure the coated seeds were allowed to stand in heaps overnight to allow the gum to harden prior to bagging. Thereafter clumping of seed was found to be minimal and the coated seed was free-flowing.

The coating was found to contain an average of approximately $10^6$ viable cells per seed when first produced. When tested up to 150 days storage of the seeds, no detectable decrease in viability was found.

The count of viable cells per seed was made by transfer of a sample of coated seed into 10 ml of Ringers' solution which was allowed to stand for 30 minutes at room temperature to dissolve the gum on the seed. The solution was vigorously mixed for 3 minutes and was then subjected to serial dilution in Ringers' solution. Standard plate counts on nutrient agar were then made. The results are given in Table II below.

## TABLE II

### Survival of Azospirillum on Seed Coat

| Period of Storage (days) | Bacterial Count/seed |
|---|---|
| 0 | $2.0 \times 10^6$ |
| 8 | $2.5 \times 10^6$ |
| 28 | $2.5 \times 10^6$ |
| 60 | $3.5 \times 10^6$ |
| 150 | $1.5 \times 10^6$ |

Seeds were planted and allowed to germinate and the resultant plants examined for the presence of Azospirillum associated with the residual seed coat and the upper middle and lower portions of the roots. The results obtained are set out in Table III below.

5

## TABLE III

Recovery of viable __Azospirillum__ from residual seed coat and plant root tissue

| Tissue | % plants with recoverable Azospirillum |
|---|---|
| Residual coat | 100 |
| Upper root (0-5 cm) | 70 |
| Middle root (5-10 cm) | 25 |
| Lower root ( $>$ 10 cm) | 50 |

EXAMPLE 4

Compositions comprising Rhizobium meliloti and Rhizobium japonicum were prepared using dried bran as support by the method of Example 1. The compositions were air-dried at 18°C for 96 hours and the viability established by the method set out in Example 1. The results are given in Table IV below.

### TABLE IV

Survival of __Rhizobium__ spp. on Air Dried Ground Bran

| Species | Stage of Preparation | Viability (cfu $g^{-1}$ bran) |
|---|---|---|
| R. meliloti | Recovered from wet bran | $3.2 \times 10^9$ |
| | Recovered after drying | $1.4 \times 10^8$ |
| R. japonicum | Recovered from wet bran | $1.4 \times 10^9$ |
| | Recovered after drying | $2.0 \times 10^8$ |

EXAMPLE 5

The survival of Azospirillum on gum ghatti alone in the absence of bran was investigated over 70 days. The results, given in Table V below, show that over this period there is only a slow loss of viability.

## TABLE V

## Survival of Azospirillum on gum ghatti alone.

| Time (days) | Bacterial Count $(g^{-1})$ |
|---|---|
| 0 | $1.8 \times 10^8$ |
| 25 | $7.6 \times 10^8$ |
| 70 | $6.8 \times 10^6$ |

**Claims**

1. An agriculturally useful seed having a coating comprising an adhesive, a carrier material and agriculturally useful microorganism cells wherein the carrier material comprises bran in a proportion between 50% and 100% by weight of the carrier material.

2. An agriculturally useful seed according to claim 1, wherein the adhesive comprises gum ghatti as the major component for adhesion.

3. A coated agriculturally useful seed according to claim 1 or claim 2 wherein the agriculturally useful microorganism is selected from Azospirillum spp., Rhizobium spp., Pseudomonas spp., Bacillus spp. and Streptomyces spp.

4. A method for applying a coating containing agriculturally useful microorganism cells to agriculturally useful seeds which comprises the steps of (1) treating the seeds with an adhesive, and (2) contacting the adhesive treated seeds with a carrier material bearing microorganism cells upon it wherein the carrier material comprises bran in a proportion between 50% and 100% by weight of the carrier material.

5. A method according to claim 4 wherein the adhesive substance comprises gum ghatti as the major component for adhesion.

6. A composition comprising agriculturally useful microorganism cells, suitable for use as a seed coating, in which the microorganism cells are supported on a carrier material consisting of from 50% to 100% by weight of bran.

7. A composition according to claim 6 containing at least $10^9$ cells per gram of the composition.

8. A composition according to claim 6 wherein the microorganism cells are selected from cells of Azospirillum spp., Rhizobium spp., Pseudomonas spp., Bacillus spp., and Streptomyces spp.

**Revendications**

7

1. Semence utile en agriculture portant un revêtement comprenant un adhésif, une substance de support et des cellules de micro-organismes utiles en agriculture, la substance de support comprenant du son en une proportion de 50 % à 100 % en poids de la substance de support.

2. Semence utile en agriculture suivant la revendication 1, dans laquelle l'adhésif comprend de la gomme ghatti comme constituant principal pour conférer l'adhérence.

3. Semence enrobée, utile en agriculture, suivant la revendication 1 ou la revendication 2, dans laquelle le micro-organisme utile en agriculture est choisi entre Azospirillum spp., Rhizobium spp., Pseudomonas spp., Bacillus spp. et Streptomyces spp.

4. Procédé d'application d'un revêtement contenant des cellules de micro-organismes utiles en agriculture à des semences utiles en agriculture, qui comprend les étapes consistant (1) à traiter les semences avec un adhésif, et (2) à mettre en contact les semences traitées avec l'adhésif avec une substance de support portant des cellules de micro-organismes, la substance de support comprenant du son en une proportion de 50 % à 100 % en poids de la substance de support.

5. Procédé suivant la revendication 4, dans lequel la substance adhésive comprend de la gomme ghatti comme constituant principal pour conférer l'adhérence.

6. Composition comprenant des cellules de micro-organismes utiles en agriculture, convenant pour l'utilisation comme revêtement de semences, dans laquelle les cellules de micro-organismes sont portés par une substance de support comprenant 50 % à 100 % en poids de son.

7. Composition suivant la revendication 6, contenant au moins $10^9$ cellules par gramme de la composition.

8. Composition suivant la revendication 6, dans laquelle les cellules de micro-organismes sont choisis entre des cellules d'Azospirillum spp., Rhizobium spp., Pseudomonas spp., Bacillus spp., et Streptomyces spp.

**Patentansprüche**

1. In der Landwirtschaft verwendbarer Samen mit einem Belag, der einen Klebstoff, ein Trägermaterial und landwirtschaftlich nützliche Mikroorganismuszellen enthält, wobei das Trägermaterial zu 50 bis 100 Gew.% aus Kleie besteht.

2. In der Landwirtschaft verwendbarer Samen nach Anspruch 1, bei welchem der Klebstoff Ghatti-Gummi als Hauptkomponente für die Verklebung enthält.

3. In der Landwirtschaft verwendbarer Samen nach Anspruch 1 oder 2, bei welchem der landwirtschaftlich nützliche Mirkroorganismus ausgewählt ist aus Azospirillum spp., Rhizobium spp., Pseudomonas spp., Bacillus spp. und Streptomyces spp.

4. Verfahren zum Aufbringen eines Belags, der landwirtschaftlich nützliche Mikroorganismuszellen enthält, auf landwirtschaftlich verwendbare Samen, bei welchem (1) der Samen mit einem Klebstoff behandelt wird und (2) der mit dem Klebstoff behandelte Samen mit einem Trägermaterial, auf das Mikroorganismuszellen aufgebracht sind, behandelt wird, wobei das Trägermatial zu 50 bis 100 Gew.% aus Kleie besteht.

5. Verfahren nach Anspruch 4, bei welchem der Klebstoff Ghatti-Gummi als Hauptkomonente für die Verklebung enthält.

6. Für die Verwendung als Samenbeschichtung geeignete Zusammensetzung, die landwirtschaftlich nützlich Mikroorganismen enthält, bei welcher die Mikroorganismuszellen auf ein Trägermaterial aufgebracht sind, das zu 50 bis 100 Gew.% aus Kleie besteht.

7. Zusammensetzung nach Anspruch 6, welche mindestens $10^9$ Zellen/g der Zusammensetzung enthält.

8. Zusammensetzung nach Anspruch 6, bei welcher die Mikroorganismuszellen ausgewählt sind aus Zellen von Azospirillum spp., Rhizobium spp., Pseudomonas spp., Bacillus spp. und Streptomyces spp.